(19) Europäisches Patentamt
European Patent Office
Office européen des brevets

(11) **EP 1 527 667 B1**

(12) **EUROPÄISCHE PATENTSCHRIFT**

(45) Veröffentlichungstag und Bekanntmachung des Hinweises auf die Patenterteilung:
**24.04.2013 Patentblatt 2013/17**

(51) Int Cl.:
*A01B 69/00* *(2006.01)*      *G01C 21/00* *(2006.01)*
*G05D 1/02* *(2006.01)*      *A01B 79/00* *(2006.01)*

(21) Anmeldenummer: **04105338.0**

(22) Anmeldetag: **27.10.2004**

(54) **System zur Führung eines Fahrzeugs**

System for guiding a vehicle

Système de guidage d'un véhicule

(84) Benannte Vertragsstaaten:
**DE FR GB IT**

(30) Priorität: **30.10.2003   US 696788**

(43) Veröffentlichungstag der Anmeldung:
**04.05.2005   Patentblatt 2005/18**

(73) Patentinhaber: **DEERE & COMPANY**
**Moline, Illinois 61265-8098 (US)**

(72) Erfinder:
• **Han, Shufeng**
  **50131, Johnston (US)**
• **Reid, John Franklin**
  **61822, Champaign (US)**
• **Pickett, Terence Daniel**
  **50263, Waukee (US)**

(74) Vertreter: **Holst, Sönke et al**
**John Deere GmbH & Co. KG**
**Global Intellectual Property Services**
**John-Deere-Strasse 70**
**68163 Mannheim (DE)**

(56) Entgegenhaltungen:
**WO-A-00/24239      DE-A1- 19 544 112**

EP 1 527 667 B1

**Beschreibung**

Die Erfindung betrifft ein Führungssystem für ein Fahrzeug, bei dem Variationen in der Bodenhöhe ausgeglichen werden.

Im Folgenden werden unter Fahrzeugen insbesondere landwirtschaftliche Fahrzeuge, Baufahrzeuge, Traktoren, Erntemaschinen, Mähdrescher und andere Geländefahrzeuge verstanden. Ein positionsbestimmender Empfänger (z. B. Empfänger für das Globale Positionierungs-System, GPS) ist einer der nützlichsten Navigationssensoren für bedienerunterstützte Navigation oder autonomen Betrieb von Fahrzeugen. Der positionsbestimmende Empfänger allein stellt jedoch typischerweise keine Daten bezüglich der Querneigung (Rollwinkel) und der Neigung zwischen der Längsachse des Fahrzeugs und der Horizontalen (Stampfwinkel) bereit. Bei bergigem Gelände oder anderen Arbeitsflächen, die nicht im Wesentlichen flach sind, kann das Fehlen von Daten hinsichtlich der Roll- und Stampfwinkel zu einer Navigationssteuerung des Fahrzeugs beitragen, die schlechter als gewünscht oder erforderlich ist, um einem im Wesentlichen geraden Weg oder einem anderen Weg mit einem Zielgrad an Genauigkeit zu folgen.

Um die Einschränkungen der positionsbestimmenden Empfänger zu vermeiden, wurde in der WO 00/24239 A1 vorgeschlagen, dem positionsbestimmenden Empfänger zusätzliche Sensoren zuzuordnen, wie faseroptische Kreisel oder Beschleunigungsmesser, um die Roll- und Stampfwinkel für das Fahrzeug während seines Betriebs zu bestimmen. Die zusätzlichen Sensoren und die Datenverarbeitungsmittel zur Verarbeitung der erfassten Daten bedeuten zusätzliche Kosten für das Fahrzeug. Außerdem sind die zusätzlichen Sensoren im Allgemeinen in der Lage, die momentane Ausrichtung (z. B. die gegenwärtigen Roll- und Stampfwinkel) des Fahrzeugs zu erfassen, können aber nicht die zu erwartende Ausrichtung (z. B. die zukünftigen Roll- und Stampfwinkel) des Fahrzeugs vorhersagen. Aufgrund der Zeitverzögerung zwischen dem Erfassen der Roll- und Stampfdaten und einer Reaktion auf die erfassten Daten ist es möglich, dass die zusätzlichen Sensoren keine sinnvolle Lösung für eine verbesserte Navigationssteuerung eines Fahrzeugs bereitstellen.

Die der Erfindung zu Grunde liegende Aufgabe wird darin gesehen, ein verbessertes Führungssystem für ein Fahrzeug bereitzustellen, bei dem Variationen in der Bodenhöhe ausgeglichen werden.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, Höhendaten und zugehörige Positionsdaten für eine zu bearbeitende Fläche bereitzustellen. Eine jeweilige Position eines Fahrzeugs auf der zu bearbeitenden Fläche wird bestimmt. Die der jeweiligen Position entsprechenden Rollund/oder Stampfdaten werden basierend auf den erhaltenen Höhendaten abgeschätzt oder bestimmt. Das Fahrzeug wird basierend auf den geschätzten Rolldaten, den geschätzten Stampfdaten oder beiden geführt, so dass es einem gewünschten Weg folgt.

In den Zeichnungen ist ein nachfolgend näher beschriebenes Ausführungsbeispiel der Erfindung dargestellt. Es zeigt:

Fig. 1        ein Blockdiagramm eines erfindungsgemäßen Fahrzeugführungssystems,

Fig. 2        ein Flussdiagramm eines Verfahrens zum Führen eines Fahrzeugs,

Fig. 3        ein Diagramm, das den Rollwinkel eines Fahrzeugs illustriert,

Fig. 4        ein Diagramm, das den Stampfwinkel eines Fahrzeugs illustriert,

Fig. 5a und 5b    Darstellungen der seitlichen Neigung, der Längsneigung und des Aspektwinkels einer zu bearbeitenden Fläche,

Fig. 6        gegenüber den Ortsdaten auf einer Zellenbasis aufgetragene Höhendaten für eine zu bearbeitende Fläche, und

Fig. 7        gegenüber den Ortsdaten auf einer Zellenbasis aufgetragene Höhendaten, Neigungsdaten und Aspektdaten für eine zu bearbeitende Fläche.

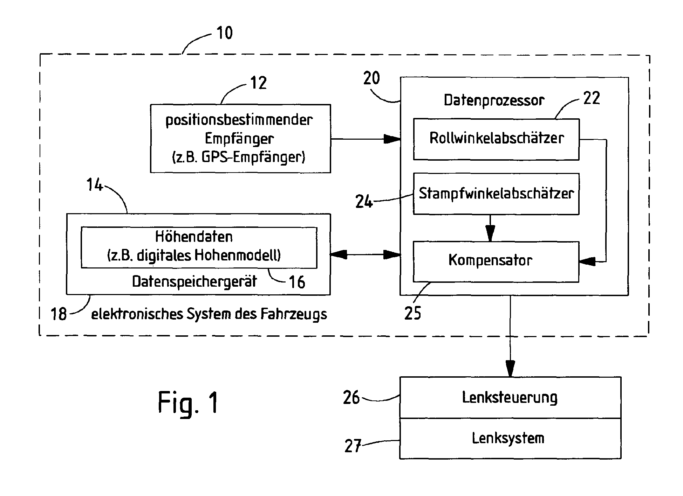

In der Figur 1 umfasst das elektronische System 10 eines Fahrzeugs einen positionsbestimmenden Empfänger 12 und ein Datenspeichergerät 18, das mit einem Datenprozessor 20 verbunden ist. Der Datenprozessor 20 ist wiederum mit einer Lenksteuerung 26 verbunden. Die Lenksteuerung 26 ist mit einem Lenksystem 27 des Fahrzeugs verbunden.

Der positionsbestimmende Empfänger 12 kann ein Empfänger für das globale Positionsbestimmungssystem (GPS), ein Loran-Empfänger, ein Loran-C-Empfänger oder ein beliebiger anderer Navigationsempfänger sein, um geographische Koordinaten des Empfängers 12 oder des Fahrzeugs, an dem er befestigt ist, bereitzustellen.

Das Datenspeichergerät 18 kann Höhendaten in Beziehung auf Ortsdaten (z. B. ein digitales Höhenmodell) einer zu bearbeitenden Fläche speichern. Bei einer Ausführungsform kann das digitale Höhenmodell die zu bearbeitende Fläche in eine Matrix von Zellen aufteilen. Die Zellen können beispielsweise von gleichförmiger Größe und Form sein. Jede Zelle kann mit Ortsdaten und Höhendaten 16 verknüpft sein. Die Ortsdaten für eine Zelle können als geographische Koordinaten oder Positionskoordinaten ausgedrückt werden, die mit einem Mittelpunkt der Zelle oder einer Grenze der Zelle verknüpft sind.

Die Topografie der zu bearbeitenden Fläche kann durch das Fahrzeug oder mittels anderer Ausrüstung vor dem Vollenden eines geplanten Wegs oder einer mit der zu bearbeitenden Fläche verbundenen Aufgabe erkundet werden. Die Erkundung oder andere Technik stellt Ortsdaten gegenüber der Höhe auf einer Zellenbasis über die zu bearbeitende Fläche bereit. Die Ortsdaten und zugeordneten Höhendaten 16 können als digitales Höhenmodell, Datenbankdatei, Nachschlagtabelle oder andere Darstellung ausgedrückt werden.

Der Datenprozessor 20 kann einen Rollwinkelabschätzer 22, einen Stampfwinkelabschätzer 24 und einen Kompensator 25 umfassen. Der Rollwinkelabschätzer 22 schätzt Rolldaten für das Fahrzeug basierend auf einem oder mehreren der folgenden Daten ab: Ortsdaten, Höhendaten 16, einer gegenwärtigen Position des Fahrzeugs, einer erwarteten Position des Fahrzeugs, der skalaren oder vektoriellen Fahrzeuggeschwindigkeit, der Richtung des Fahrzeugs und einem Wegplan. Der Stampfwinkelabschätzer 24 schätzt Stampfdaten für das Fahrzeug basierend auf einem oder mehreren der folgenden Daten ab: Ortsdaten, Höhendaten 16, einer gegenwärtigen Position des Fahrzeugs, einer erwarteten Position des Fahrzeugs, der Fahrzeuggeschwindigkeit, der Richtung des Fahrzeugs und einem Wegplan.

Der Kompensator 25 gleicht eventuelle Variationen in den Rollund Stampfdaten des Fahrzeugs aus, die durch lokale oder globale Änderungen im Gelände oder der Topographie der zu bearbeitenden Fläche bedingt werden. Bei einer Ausführungsform erhält der Kompensator 25 Rohwegdaten für das Fahrzeug und gibt einen kompensierten Wegplan für das Fahrzeug aus, der die aktuellen Stampfdaten und/oder die aktuellen Rolldaten und/oder die erwarteten Stampfdaten und/oder die erwarteten Rolldaten des Fahrzeugs berücksichtigt. Der Rohwegplan repräsentiert Positionen und Fahrtrichtungen des Fahrzeugs, wobei im Wesentlichen flaches oder ideales Gelände vorausgesetzt wird, wobei der kompensierte Wegplan Positionen und Fahrtrichtungen des Fahrzeugs repräsentiert, bei denen das aktuelle Gelände mit Hügeln, Wellen oder anderen Variationen in der Neigung oder Höhe des Bodens ausgeglichen sind. Der Kompensator 25 sendet den kompensierten Wegplan oder (damit verbundene) Kompensationsdaten an die Lenksteuerung 26, um das Fahrzeug entlang eines gewünschten Wegs oder einer Route zu lenken. Die Lenksteuerung 26 kontrolliert die Lenkung und Fahrtrichtung des Fahrzeugs (z. B. die Fahrtrichtung entlang eines geplanten Wegs) über das Lenksystem 27 basierend auf einem Wegplan und Kompensationsdaten.

Die Lenksteuerung 26 bildet eine Schnittstelle zwischen dem elektronischen System 10 des Fahrzeugs und dem Lenksystem 27. Das Lenksystem 27 kann ein hydraulisches Lenksystem, ein hydraulisch unterstütztes Lenksystem, ein elektrisches Lenksystem, ein mechanisches Lenksystem, ein durch ein Getriebe angetriebenes Lenksystem, oder dergleichen aufweisen, das mit dem Fahrzeug verbunden ist. Ein hydraulisch unterstütztes oder elektrisches Lenksystem kann eingerichtet sein, beispielsweise ein mechanisches Lenksystem, ein über ein Getriebe angetriebenes Lenksystem oder ein Lenksystem mit einer Zahnstange und einem Zahnrad zu unterstützen. Hydraulische und hydraulisch unterstützte Lenksysteme können elektromechanische Aktoren umfassen, um Ventile zu betätigen oder auf andere Weise die hydraulischen Elemente des Lenksystems 27 zu unterstützen. Elektrische Lenksysteme können Elektromotoren (direkt oder indirekt über Verbindungen) verwenden, um die Orientierung eines oder mehrerer Räder zu ändern, die sich in Bodenberührung befinden. Kompensationsdaten oder entsprechende Korrektursignale können zum Beispiel an einen Lenkmotortreiber oder eine andere Lenksteuerung 26 geschickt werden.

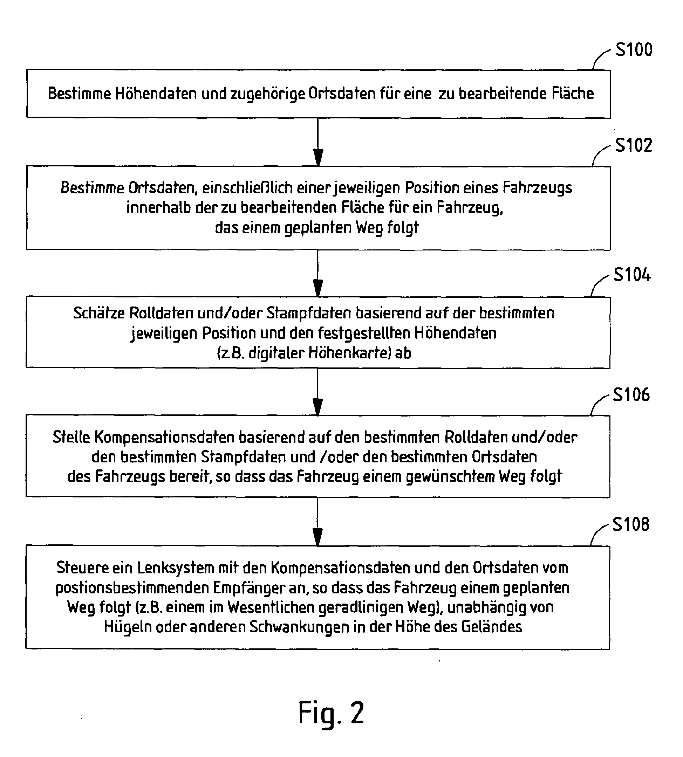

Die Figur 2 stellt ein Flussdiagramm eines Verfahrens zum Führen eines Fahrzeugs dar, das einen verbesserten Ausgleich von Variationen der Bodenhöhe beinhaltet. Das Verfahren gemäß Figur 2 beginnt mit dem Schritt S100.

Im Schritt S100 werden Höhendaten und zugehörige Ortsdaten für eine zu bearbeitende Fläche generiert. Die zu bearbeitende Fläche kann in eine Gruppe von Zellen mit im Wesentlichem gleicher Größe und Form aufgeteilt werden. Die zu bearbeitende Fläche kann beispielsweise in eine Matrix mit im Wesentlichen rechteckigen oder quadratischen Zellen aufgeteilt werden. Jede Zelle ist mit Ortsdaten und Höhendaten der Zelle verknüpft. Die Ortsdaten der Zelle können beispielsweise geographische Koordinaten wiedergeben, die eine Zellenumrandung definieren, und die Höhendaten der Zelle können die Höhe, Neigung oder andere Eigenschaften des Bodens repräsentieren.

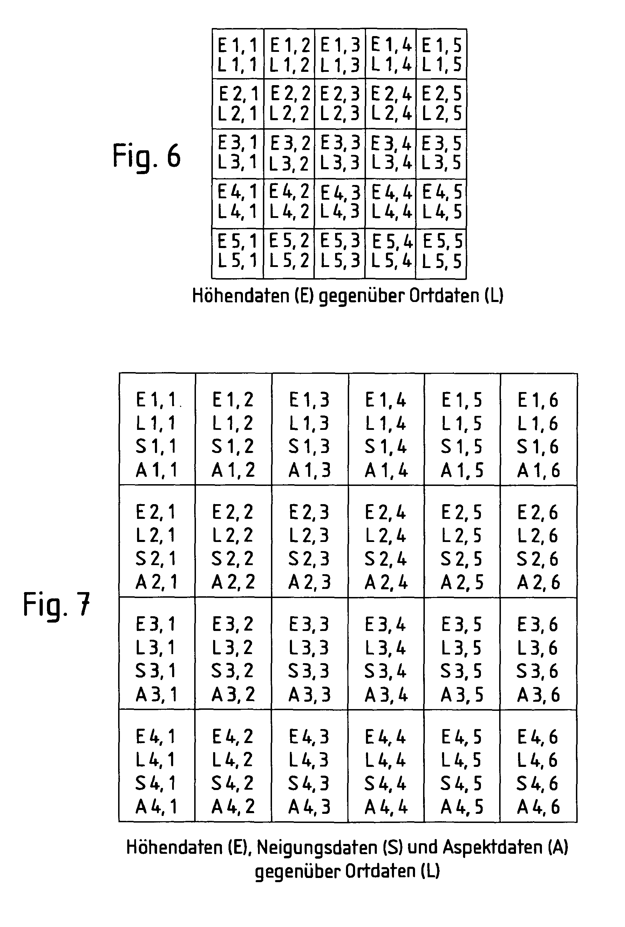

Neigungsdaten in Bezug auf Ortsdaten oder Höhendaten in Bezug auf Ortsdaten werden über die zu bearbeitende Fläche und vorzugsweise innerhalb jeder Zelle bestimmt. Eine digitale Höhenkarte kann basierend auf einer Sammlung der Höhendaten der Zellen und der zugehörigen Ortsdaten der Zellen erzeugt werden. Die Figuren 6 und 7 stellen anschauliche Beispiele digitaler Höhenkarten dar, die gemäß Schritt S100 erzeugt werden könnten.

Im Schritt S102 bestimmt der positionsbestimmende Empfänger 12 Ortsdaten, einschließlich einer jeweiligen Position des Fahrzeugs zu einer entsprechenden Zeit innerhalb der zu bearbeitenden Fläche. Die jeweilige Position kann eine oder mehrere folgender Positionen beinhalten: (1) eine gegenwärtige Position des Fahrzeugs, (2) eine geplante Position des Fahrzeugs und (3) ein Wegplan, der die gegenwärtige Position und die geplante Position des Fahrzeugs untereinander verbindet.

Im Schritt S104 schätzt ein Abschätzer die Rolldaten und/oder die Stampfdaten basierend auf der bestimmten, jeweiligen Position und den festgestellten Höhendaten (z. B. digitale Höhenkarte) ab. Der Rollwinkelabschätzer 22 kann beispielsweise Rolldaten für das Fahrzeug abschätzen, die mit entsprechenden Orts- oder Positionsdaten für einen Weg verknüpft sind. In ähnlicher Weise kann der Stampfwinkelabschätzer 24 Stampfdaten für das Fahrzeug abschätzen, die mit entsprechenden Orts- oder Positionsdaten verknüpft sind. Der Schritt S104 kann einen oder mehrere der folgenden Schritte beinhalten: Zuerst werden die Positionsdaten verwendet, um geeignete, zugehörige Höhendaten auszulesen, die vorher festgestellt wurden. Als Zweites werden die Rolldaten, Stampfdaten, oder beide anhand der festgestellten Höhendaten bestimmt.

Die Bestimmung der Roll- oder Stampfdaten anhand der festgestellten Höhendaten kann entsprechend unterschiedlicher, alternativ verwendbarer Gleichungen oder Formeln durchgeführt werden. Bei einem Beispiel werden folgende Gleichungen verwendet, um die Stampf- und Rollwinkel zu bestimmen:

$$\Phi \,(\text{Rollwinkel}) = H_y = \sin H \sqrt{1 - \sin^2 \psi} \ ,$$

und

$$\theta \,(\textit{Stampfwinkel}) = H_x = \sin H \sqrt{1 - \cos^2 \psi} \ ,$$

wobei $\Psi$ der Aspekt, H die Neigung, $H_x$ der Neigungswinkel in Längsrichtung, $H_y$ der seitliche Neigungswinkel sind und die Fahrtrichtung des Fahrzeugs mit der X-Achse zusammenfällt, und

$$\sin H_x = \sin H \sqrt{1 - \sin^2 \psi}$$

$$\sin H_y = \sin H \sqrt{1 - \cos^2 \psi} \ ,$$

wobei $\psi$ der Aspekt ist, H die Neigung, $H_x$ der Neigungswinkel in Längsrichtung und $H_y$ der seitliche Neigungswinkel ist.

Die obigen Gleichungen basieren auf der Geometrie des Fahrzeugs und die Topographie der Fläche. Der Rollwinkelabschätzer 22 kann den Rollwinkel für die Zellen entlang eines geplanten Wegs oder eines Rohweges bestimmen, während der Stampfwinkelabschätzer 24 den Stampfwinkel für die Zellen entlang des geplanten Wegs oder Rohwegs bestimmen kann.

Bei einem anderen Beispiel können statische Kraftgleichgewichtsgleichungen, dynamische Kraftgleichungen oder beide verwendet werden, um die obigen Gleichungen zur Bestimmung der Roll- und Stampfwinkel zu verfeinern oder zu ersetzen. Die statischen Kraftgleichgewichtsgleichungen und die dynamischen Kraftgleichgewichtsgleichungen können eine oder mehrere der folgenden Variablen berücksichtigen: Fahrzeuggeometrie (Größe), Reifengeometrie, Fahrzeugmasse und Beladung, Fahrzeugreifenabstand in Quer- und Längsrichtung, auf die Reifen des Fahrzeugs wirkende Kräfte sowie Geschwindigkeiten und Beschleunigungen des Fahrzeugs und ihre Komponenten.

Im Schritt S106 stellt der Kompensator 25 Kompensationsdaten bereit, die auf mindestens einem der Folgenden basieren: (1) geschätzte Rolldaten, (2) geschätzte Stampfdaten, (3) der geplante Weg des Fahrzeugs, (4) die Position des Fahrzeugs, (5) der Geschwindigkeitsbetrag des Fahrzeugs, (6) die vektorielle Geschwindigkeit (d. h. Geschwindigkeit und Richtung) des Fahrzeugs, (7) Beschleunigung oder Verzögerung des Fahrzeugs beim Folgen eines gewünschten Wegs. Die geschätzten Rolldaten, die geschätzten Stampfdaten oder beide werden verwendet, um Kompensationsdaten oder eine andere korrigierende Eingabe für die Lenksteuerung 26 zu erzeugen. Es wird davon ausgegangen, dass Kompensationsdaten für eine beliebige Zelle von (a) der Richtung beim Eintritt und dem Eintrittsort des Fahrzeugs in die Zelle, (b) der Richtung des Verlassens und der Ort des Verlassens der Zelle, (c) der Fahrzeuggeschwindigkeit und (d) einem insgesamt geplanten Weg des Fahrzeugs abhängen können.

Im Schritt S108 steuert die Lenksteuerung 26 das Lenksystem 27 anhand der Kompensationsdaten des Kompensators 25 und der Ortsdaten vom positionsbestimmenden Empfänger 12, so dass das Fahrzeug einen geplanten Weg (z. B. einen im Wesentlichen geradlinigen Weg) abfährt, unbeeinflusst durch Hügel oder andere Schwankungen in der Höhe des Geländes. Durch die Kompensationsdaten können das Zittern, Wackeln oder andere unerwünschte Abweichungen der Position des Fahrzeugs auf dem aktuellen Weg von dem gewünschten Weg vermindert werden, die ansonsten auftreten. Die Kompensationsdaten stellen eine Kompensation zum Ausgleich der Differenz zwischen einem aktuellen, ortsbasierten Führungsweg und einem erzielten, geplanten Weg (z. B. einem im Wesentlichen geradlinigen Weg) dar.

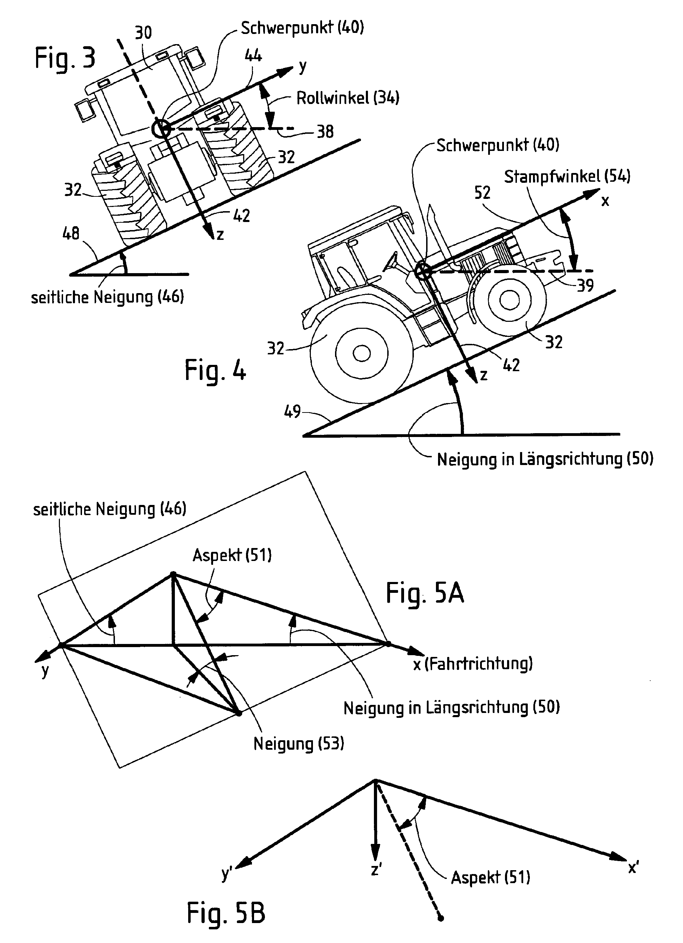

Die Figur 3 stellt eine Rückansicht eines Fahrzeugs 30 mit Reifen 32 dar, die auf einem seitlich geneigten Boden 48 ruhen. Der Rollwinkel 34 (Φ) ist in Bezug auf den Schwerpunkt 40 des Fahrzeugs 30 definiert. Die Scheitellinie des Rollwinkels 34 erstreckt sich durch den Schwerpunkt 40 des Fahrzeugs 30. Eine erste Seite 38 (durch gestrichelte Linien dargestellt) des Rollwinkels 34 ist im Wesentlichen parallel zu ungeneigtem oder ebenem Boden, während die andere Seite (durch den Pfeil in Y-Richtung gekennzeichnet) des Rollwinkels 34 im Wesentlichen parallel zur seitlichen Neigung 46 des geneigten Bodens verläuft. Die Z-Achse 42 gibt eine Normalkraft des Fahrzeugs 30 auf den geneigten Boden 48 wieder.

Die Figur 4 stellt eine Seitenansicht des Fahrzeugs 30 mit Reifen 32 dar, die auf dem in Längsrichtung geneigten Boden 49 ruhen. Der Stampfwinkel 54 (Θ) ist gegenüber dem Schwerpunkt 40 des Fahrzeugs 30 definiert. Die Scheitellinie des Stampfwinkels 54 erstreckt sich durch den Schwerpunkt 40 des Fahrzeugs 30. Eine Seite 39 des Stampfwinkels 54 ist im Wesentlichen parallel zu ungeneigtem oder ebenem Boden, während die andere Seite des Stampfwinkels 52 im Wesentlichen parallel zur seitlichen Neigung des geneigten Bodens verläuft. Die Z-Achse 42 gibt eine Normalkraft des Fahrzeugs 30 auf den geneigten Boden 48 wieder.

Die Figur 5 stellt die Neigung des Geländes von zumindest einem Abschnitt (z. B. einer Zelle) der zu bearbeitenden Fläche dar. Die Neigung (H) umfasst eine seitliche Neigung 46 ($H_y$) und eine Neigung 50 in Längsrichtung ($H_x$). Die Figuren 5a und 5b zeigen einen Aspekt, der die Änderung der Neigung (H) oder die erste Ableitung der Neigung wiedergibt. Bei einer Ausführungsform kann jede Zelle durch eine Neigung (H) definiert werden, die folgende Komponenten umfasst: eine Neigung 50 in Längsrichtung ($H_x$) und eine seitliche Neigung 46 ($H_y$). Der Aspekt 51 oder Aspektwinkel (Ψ) ist die Richtung der maximalen Neigung, gemessen gegenüber der X-Achse. Der Aspektwinkel ist der Winkel zwischen der X-Achse und der maximalen Neigung. Die Fahrtrichtung kann derart definiert werden, dass sie mit der X-Achse zusammenfällt. Die Beziehung zwischen den Neigungen ist folgendermaßen definiert:

$$\sin H_x = \sin H \sqrt{1 - \sin^2 \psi}$$

$$\sin H_y = \sin H \sqrt{1 - \cos^2 \psi} \ ,$$

wobei ψ der Aspekt ist, H die Neigung, $H_x$ der Neigungswinkel in Längsrichtung und $H_y$ die seitliche Neigung 46 ist.

Der Roll- und Stampfwinkel für jede Zelle oder anderen Abschnitt der zu bearbeitenden Fläche kann durch Anwendung folgender Gleichungen abgeschätzt werden:

$$\Phi \,(\text{Rollwinkel}) = H_y = \sin H \sqrt{1 - \sin^2 \psi} \ ,$$

und

$$\theta \,(\textit{Stampfwinkel}) = H_x = \sin H \sqrt{1 - \cos^2 \psi} \ ,$$

wobei ψ der Aspekt ist, H die Neigung, $H_x$ der Neigungswinkel in Längsrichtung und $H_y$ die seitliche Neigung 46 ist.

In der Praxis können die obigen Gleichungen durch statische Kraftgleichgewichtsgleichungen und dynamische Gleichungen verändert oder begleitet werden, die sich auf das auf der zu bearbeitenden Fläche arbeitende Fahrzeug 30 beziehen. Die statischen Kraftgleichgewichtsgleichungen und die dynamischen Gleichungen können eine oder mehrere der folgenden Variablen berücksichtigen: (a) Fahrzeuggeometrie und Abmessungen, (b) Fahrzeugmasse und Beladung, (c) auf die Reifen des Fahrzeugs wirkende Kräfte (d) Geschwindigkeiten und Beschleunigungen des Fahrzeugs, und (e) andere Größen oder Spezifikationen des Fahrzeugs.

Die Figur 6 stellt eine erste digitale Höhenmodellkarte in graphischer Form dar. Es ist verständlich, dass jede digitale erfasste Modellkarte als Tabelle, als relationale Datenbank oder als invertierte Datei dargestellt werden kann. Das digitale Höhenmodell unterteilt eine zu bearbeitende Fläche in gleichförmig geformte Zellen (z. B. Rechtecke oder Quadrate) auf. Für jede einzelne Zelle kann ein gleichförmiger Wert für die Höhe und Neigung angenommen werden.

Die Zellengröße kann von der Verfügbarkeit topografischer Daten für die zu bearbeitende Fläche abhängen. Eine Zellengröße, die kleiner oder gleich der Fahrzeuglänge ist, ist bevorzugt, um eine hinreichend genaue Abschätzung der Stampf- und Rolldaten zu erhalten. Die digitale erste Höhenkarte aus Figur 6 unterteilt die zu bearbeitende Fläche in eine Fläche von fünf mal fünf rechteckiger Zellen, wobei jede Zelle Höhendaten (E) und Ortsdaten (L) aufweist. Der Identifikator für die Zelle in Zeile 1, Spalte 1 ist beispielsweise mit $E_{1,1}$ und $L_{1,1}$ verbunden, der Identifikator für die Zelle in Zeile 2, Spalte 2 ist mit $E_{2,2}$ und $L_{2,2}$ verbunden, etc..

Die Figur 7 zeigt eine zweite digitale Höhenmodellkarte in graphischer Form. Die digitale zweite Höhenkarte aus Figur 7 unterteilt die zu bearbeitende Fläche in eine Fläche von vier mal sechs rechteckiger Zellen. Jede Zelle innerhalb der zweiten digitalen Höhenkarte kann mit entsprechenden gleichförmigen Höhendaten (E), Neigungsdaten (S), Aspektdaten (A) und Ortsdaten (L) verknüpft oder ihnen zugeordnet sein. Zum Beispiel ist der Identifikator für die Zelle in Zeile 1, Spalte 1 mit $E_{1,1}$, $L_{1,1}$ $S_{1,1}$ und $A_{1,1}$ verbunden, etc.. Die Figuren 6 und 7 sind anschauliche Beispiele von Repräsentationen eines digitalen Höhenmodells; reelle Repräsentationen können in ihrer Größe, Form, der Anzahl der Zellen und/oder der Anzahl an Variablen pro Zelle variieren.

**Patentansprüche**

1.  System zur Führung eines Fahrzeugs (30), mit einem Datenspeichergerät (18) zur Abspeicherung von Ortsdaten für eine zu bearbeitende Fläche, einem positionsbestimmenden Empfänger (12) zur Bestimmung einer jeweiligen Position des Fahrzeugs (30) innerhalb der zu bearbeitenden Fläche, einem Datenprozessor (20), der einen Rollwinkelabschätzer (22) zur Abschätzung von Rolldaten, die der jeweiligen Position entsprechen, und einen Stampfwinkelabschätzer (24) zur Abschätzung von Stampfdaten umfasst, die der jeweiligen Position entsprechen, und mit einer Lenksteuerung (26), die betreibbar ist, das Fahrzeug (30) unter Verwendung der abgeschätzten Rolldaten und Stampfdaten zu führen, so dass das Fahrzeug (30) einem gewünschten Weg folgt, **dadurch gekennzeichnet, dass** das Datenspeichergerät (18) zur Abspeicherung von Höhendaten (16) und zugehörigen Ortsdaten für die zu bearbeitende Fläche eingerichtet ist, dass der Rollwinkelabschätzer (22) zur Abschätzung von Rolldaten betreibbar ist, die auf der jeweiligen Position und vorher festgestellten Höhendaten (16) basieren, und dass der Stampfwinkelabschätzer (24) zur Abschätzung von Stampfdaten betreibbar ist, die auf der jeweiligen Position und vorher festgestellten Höhendaten (16) basieren.

2.  System nach Anspruch 1, **dadurch gekennzeichnet, dass** die Rolldaten Rollwinkeldaten sind und dass die Stampfdaten Stampfwinkeldaten sind.

3.  System nach Anspruch 1 oder 2, **dadurch gekennzeichnet, dass** die zu bearbeitende Fläche in eine Gruppe von Zellen unterteilt ist, und dass jeder Zelle eine zugehörige Höhe und ein zugehöriger Ort zugeordnet ist.

4.  System nach einem der Ansprüche 1 bis 3, **dadurch gekennzeichnet, dass** das Datenspeichergerät (18) außerdem jeweilige Neigungsdaten und Aspektdaten abspeichert, die den Ortsdaten zugeordnet sind, wobei die Neigungsdaten eine Änderung der Höhe und die Aspektdaten die Richtung der Neigung wiedergeben.

5.  System nach einem der Ansprüche 1 bis 4, **dadurch gekennzeichnet, dass** der gewünschte Weg ein zumindest im Wesentlichen geradliniges Wegsegment umfasst.

6.  System nach einem der Ansprüche 1 bis 5, **dadurch gekennzeichnet, dass** der Datenprozessor (20) betreibbar ist, ein Lenkungskompensationssignal zu erzeugen, um Änderungen in den Rolldaten und Stampfdaten zwischen einer ersten Position und einer zweiten Position innerhalb der zu bearbeitenden Fläche zu kompensieren und den gewünschten Weg einzuhalten.

7.  System nach einem der Ansprüche 1 bis 6, **dadurch gekennzeichnet, dass** der Stampfwinkelabschätzer (24) betreibbar ist, die Stampfdaten basierend auf einem oder mehreren folgender Werte zu bestimmen: Ortsdaten, Höhendaten, aktuelle Position des Fahrzeugs, erwartete Position des Fahrzeugs, Fahrzeuggeschwindigkeit, Fahrzeugrichtung und einem Wegplan.

8.  System nach einem der Ansprüche 1 bis 7, **dadurch gekennzeichnet, dass** der Stampfwinkelabschätzer (24) betreibbar ist, die Stampfdaten anhand der Gleichung $\theta(Stampfwinkel) = H_x = sin\mathrm{H}\sqrt{1-\cos^2\psi}$ zu bestimmen, wobei $\psi$ der Aspekt ist, H die Neigung und $H_x$ der Neigungswinkel in Längsrichtung ist.

9. System nach einem der Ansprüche 1 bis 8, **dadurch gekennzeichnet, dass** der Rollwinkelabschätzer (22) betreibbar ist, die Stampfdaten basierend auf einem oder mehreren folgender Werte zu bestimmen: Ortsdaten, Höhendaten, aktuelle Position des Fahrzeugs, erwartete Position des Fahrzeugs, Fahrzeuggeschwindigkeit, Fahrzeugrichtung und einem Wegplan.

10. System nach einem der Ansprüche 1 bis 9, **dadurch gekennzeichnet, dass** der Rollwinkelabschätzer (22) betreibbar ist, die Rolldaten anhand der Gleichung $\Phi(\text{Rollwinkel}) = H_y = \sin H \sqrt{1 - \sin^2 \psi}$ zu bestimmen, wobei $\psi$ der Aspekt ist, H die Neigung und $H_y$ die seitliche Neigung (46) ist.

**Claims**

1. System for guiding a vehicle (30), having a data storage device (18) for storing location data for an area to be worked, a position-determining receiver (12) for determining a respective position of the vehicle (30) within the area to be worked, a data processor (20) which comprises a rolling angle estimator (22) for estimating rolling data which corresponds to the respective position, and a pitching angle estimator (24) for estimating pitching data which corresponds to the respective position, and having a steering controller (26) which can be operated to move the vehicle (30) using the estimated rolling data and pitching data, with the result that the vehicle (30) follows a desired route, **characterized in that** the data storage device (18) is configured to store altitude data (16) and associated location data for the area to be worked, **in that** the rolling angle estimator (22) can be operated to estimate rolling data which is based on the respective position and previously detected altitude data (16), and **in that** the pitching angle estimator (24) can be operated to estimate pitching data which is based on the respective position and previously detected altitude data (16).

2. System according to Claim 1, **characterized in that** the rolling data is rolling angle data, and **in that** the pitching data is pitching angle data.

3. System according to Claim 1 or 2, **characterized in that** the area to be worked is divided into a group of cells, and **in that** an associated altitude and an associated location are assigned to each cell.

4. System according to one of Claims 1 to 3, **characterized in that** the data storage device (18) also stores respective inclination data and aspect data which is assigned to the location data, wherein the inclination data represents change in the altitude and the aspect data represents the direction of the inclination.

5. System according to one of Claims 1 to 4, **characterized in that** the desired route comprises an at least substantially linear route segment.

6. System according to one of Claims 1 to 5, **characterized in that** the data processor (20) can be operated to generate a steering compensation signal in order to compensate for changes in the rolling data and pitching data between a first position and a second position inside the area to be worked and to maintain the desired route.

7. System according to one of Claims 1 to 6, **characterized in that** the pitching angle estimator (24) can be operated to determine the pitching data on the basis of one or more of the following values: location data, altitude data, current position of the vehicle, expected position of the vehicle, vehicle speed, vehicle direction and a route plan.

8. System according to one of Claims 1 to 7, **characterized in that** the pitching angle estimator (24) can be operated to determine the pitching data by means of the equation

$$\theta(pitching\ angle) = H_x = \sin H \sqrt{1 - \cos^2 \psi}\ ,$$ wherein $\psi$ is the aspect, H is the inclination and $H_x$ is the angle of inclination in the longitudinal direction.

9. System according to one of Claims 1 to 8, **characterized in that** the rolling angle estimator (22) can be operated to determine the rolling data on the basis of one or more of the following values: location data, altitude data, current position of the vehicle, expected position of the vehicle, vehicle speed, vehicle direction and a route plan.

10. System according to one of Claims 1 to 9, **characterized in that** the rolling angle estimator (22) can be operated to determine the rolling data by means of the equation

$$\Phi(\text{rolling angle}) = H_y = sinH\sqrt{1-sin}^2\psi$$ wherein $\psi$ is the aspect, **H** is the inclination and **H_y** is the lateral inclination (46).


**Revendications**

1. Système de guidage d'un véhicule (30), comprenant un appareil de mémorisation de données (18) pour mettre en mémoire des données de localisation pour une surface à traiter, un récepteur (12) déterminant la position pour déterminer une position correspondante du véhicule (30) à l'intérieur de la surface à traiter, un processeur de données (20), lequel englobe un estimateur d'angle de roulis (22) pour estimer des données de roulis qui correspondent à la position correspondante, et un estimateur d'angle de tangage (24) pour estimer des données de tangage qui correspondent à la position correspondante, et comprenant une commande de direction (26) qui peut être utilisée pour guider le véhicule (30) en utilisant les données de roulis et les données de tangage estimées, de sorte que le véhicule (30) suive un trajet souhaité, **caractérisé en ce que** l'appareil de mémorisation de données (18) est conçu pour mettre en mémoire des données de hauteur (16) et des données de localisation associées pour la surface à traiter, **en ce que** l'estimateur d'angle de roulis (22) peut être utilisé pour estimer les données de roulis qui se basent sur la position correspondante et les données de hauteur (16) définies précédemment, et **en ce que** l'estimateur d' angle de tangage (24) peut être utilisé pour estimer les données de tangage qui se basent sur la position correspondante et les données de hauteur (16) définies précédemment.

2. Système selon la revendication 1, **caractérisé en ce que** les données de roulis sont des données d'angle de roulis et **en ce que** les données de tangage sont des données d'angle de tangage.

3. Système selon la revendication 1 ou 2, **caractérisé en ce que** la surface à traiter est divisée en un groupe de cellules et **en ce qu'**une hauteur associée et un lieu associé sont associés à chaque cellule.

4. Système selon l'une des revendications 1 à 3, **caractérisé en ce que** l'appareil de mémorisation de données (18) met en plus en mémoire les données d'inclinaison et les données d'aspect correspondantes qui sont associées aux données de localisation, les données d'inclinaison reproduisant une modification de la hauteur et les données d'aspect le sens de l'inclinaison.

5. Système selon l'une des revendications 1 à 4, **caractérisé en ce que** le trajet souhaité comprend un segment de trajet au moins pour l'essentiel rectiligne.

6. Système selon l'une des revendications 1 à 5, **caractérisé en ce que** le processeur de données (20) peut être utilisé pour générer un signal de compensation de la direction afin de compenser les modifications dans les données de roulis et les données de tangage entre une première position et une deuxième position à l'intérieur de la surface à traiter et respecter le trajet souhaité.

7. Système selon l'une des revendications 1 à 6, **caractérisé en ce que** l'estimateur d'angle de tangage (24) peut être utilisé pour déterminer les données de tangage en se basant sur une ou plusieurs des valeurs suivantes : données de localisation, données de hauteur, position actuelle du véhicule, position attendue du véhicule, vitesse du véhicule, direction du véhicule et un plan du trajet.

8. Système selon l'une des revendications 1 à 7, **caractérisé en ce que** l'estimateur d'angle de tangage (24) peut être utilisé pour déterminer les données de tangage au moyen de l'équation

$$\theta(\text{Angle de tangage}) = H_x = sinH\sqrt{1-cos^2}\psi,$$ $\psi$ désignant l'aspect, H l' inclinaison et $H_x$ l'angle d'inclinaison dans le sens longitudinal.

9. Système selon l'une des revendications 1 à 8, **caractérisé en ce que** l'estimateur d'angle de roulis (22) peut être utilisé pour déterminer les données de roulis en se basant sur une ou plusieurs des valeurs suivantes : données de localisation, données de hauteur, position actuelle du véhicule, position attendue du véhicule, vitesse du véhicule, direction du véhicule et un plan du trajet.

**10.** Système selon l'une des revendications 1 à 9, **caractérisé en ce que** l'estimateur d'angle de roulis (22) peut être utilisé pour déterminer les données de roulis au moyen de l'équation

$$\Phi(\text{Angle de roulis}) = H_y = \sin H\sqrt{1 - \sin^2\psi}, \quad \psi \quad \psi \text{ désignant l'aspect, H l'inclinaison et } H_y \text{ l'inclinaison latérale (46).}$$

Fig. 1

S100

| Bestimme Höhendaten und zugehörige Ortsdaten für eine zu bearbeitende Fläche |

S102

| Bestimme Ortsdaten, einschließlich einer jeweiligen Position eines Fahrzeugs innerhalb der zu bearbeitenden Fläche für ein Fahrzeug, das einem geplanten Weg folgt |

S104

| Schätze Rolldaten und/oder Stampfdaten basierend auf der bestimmten jeweiligen Position und den festgestellten Höhendaten (z.B. digitaler Höhenkarte) ab |

S106

| Stelle Kompensationsdaten basierend auf den bestimmten Rolldaten und/oder den bestimmten Stampfdaten und /oder den bestimmten Ortsdaten des Fahrzeugs bereit, so dass das Fahrzeug einem gewünschtem Weg folgt |

S108

| Steuere ein Lenksystem mit den Kompensationsdaten und den Ortsdaten vom postionsbestimmenden Empfänger an, so dass das Fahrzeug einem geplanten Weg folgt (z.B. einem im Wesentlichen geradlinigen Weg), unabhängig von Hügeln oder anderen Schwankungen in der Höhe des Geländes |

Fig. 2

Fig. 3

Schwerpunkt (40)

30

44

y

Rollwinkel (34)

38

32

32

42

z

48

seitliche Neigung (46)

Schwerpunkt (40)

Stampfwinkel (54)

52

x

39

32

32

42

z

Fig. 4

49

Neigung in Längsrichtung (50)

seitliche Neigung (46)

Aspekt (51)

Fig. 5A

y

x (Fahrtrichtung)

Neigung in Längsrichtung (50)

Neigung (53)

y'

z'

x'

Aspekt (51)

Fig. 5B

Fig. 6

| E 1, 1 | E 1, 2 | E 1, 3 | E 1, 4 | E 1, 5 |
| L 1, 1 | L 1, 2 | L 1, 3 | L 1, 4 | L 1, 5 |
| E 2, 1 | E 2, 2 | E 2, 3 | E 2, 4 | E 2, 5 |
| L 2, 1 | L 2, 2 | L 2, 3 | L 2, 4 | L 2, 5 |
| E 3, 1 | E 3, 2 | E 3, 3 | E 3, 4 | E 3, 5 |
| L 3, 1 | L 3, 2 | L 3, 3 | L 3, 4 | L 3, 5 |
| E 4, 1 | E 4, 2 | E 4, 3 | E 4, 4 | E 4, 5 |
| L 4, 1 | L 4, 2 | L 4, 3 | L 4, 4 | L 4, 5 |
| E 5, 1 | E 5, 2 | E 5, 3 | E 5, 4 | E 5, 5 |
| L 5, 1 | L 5, 2 | L 5, 3 | L 5, 4 | L 5, 5 |

Höhendaten (E) gegenüber Ortdaten (L)

Fig. 7

| E 1, 1 | E 1, 2 | E 1, 3 | E 1, 4 | E 1, 5 | E 1, 6 |
| L 1, 1 | L 1, 2 | L 1, 3 | L 1, 4 | L 1, 5 | L 1, 6 |
| S 1, 1 | S 1, 2 | S 1, 3 | S 1, 4 | S 1, 5 | S 1, 6 |
| A 1, 1 | A 1, 2 | A 1, 3 | A 1, 4 | A 1, 5 | A 1, 6 |
| E 2, 1 | E 2, 2 | E 2, 3 | E 2, 4 | E 2, 5 | E 2, 6 |
| L 2, 1 | L 2, 2 | L 2, 3 | L 2, 4 | L 2, 5 | L 2, 6 |
| S 2, 1 | S 2, 2 | S 2, 3 | S 2, 4 | S 2, 5 | S 2, 6 |
| A 2, 1 | A 2, 2 | A 2, 3 | A 2, 4 | A 2, 5 | A 2, 6 |
| E 3, 1 | E 3, 2 | E 3, 3 | E 3, 4 | E 3, 5 | E 3, 6 |
| L 3, 1 | L 3, 2 | L 3, 3 | L 3, 4 | L 3, 5 | L 3, 6 |
| S 3, 1 | S 3, 2 | S 3, 3 | S 3, 4 | S 3, 5 | S 3, 6 |
| A 3, 1 | A 3, 2 | A 3, 3 | A 3, 4 | A 3, 5 | A 3, 6 |
| E 4, 1 | E 4, 2 | E 4, 3 | E 4, 4 | E 4, 5 | E 4, 6 |
| L 4, 1 | L 4, 2 | L 4, 3 | L 4, 4 | L 4, 5 | L 4, 6 |
| S 4, 1 | S 4, 2 | S 4, 3 | S 4, 4 | S 4, 5 | S 4, 6 |
| A 4, 1 | A 4, 2 | A 4, 3 | A 4, 4 | A 4, 5 | A 4, 6 |

Höhendaten (E), Neigungsdaten (S) und Aspektdaten (A)
gegenüber Ortdaten (L)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0024239 A1